# EUROPÄISCHE PATENTSCHRIFT

(11) **EP 3 272 508 B1**
(45) Veröffentlichungstag und Bekanntmachung des Hinweises auf die Patenterteilung: **01.05.2019**
(21) Anmeldenummer: 17179945.5
(22) Anmeldetag: 06.07.2017
(51) Int. Cl.: B29C 70/54, B29C 65/48, B31F 5/04, B29C 65/00, B65H 69/06, B29C 70/38, B31F 7/00

(54) **VERFAHREN ZUM VERSPLEISSEN VON VORIMPRÄGNIERTEN VERSTÄRKUNGSFASERN**
METHOD OF SPLICING PRE-IMPREGNATED REINFORCING FIBRES
PROCÉDÉ DESTINÉ À ÉPISSER DES FIBRES DE RENFORT PRÉ-IMPRÉGNÉES

(30) Priorität: 06.07.2016 DE 102016212313; 17.11.2016 DE 102016122112
(43) Veröffentlichungstag der Anmeldung: 24.01.2018
(73) Patentinhaber: Airbus Operations GmbH, 21129 Hamburg (DE)
(72) Erfinder: Roth, York, 21129 Hamburg (DE); Witte, Tassilo, 21129 Hamburg (DE); Kako, Jan, 21129 Hamburg (DE)
(74) Vertreter: Schicker, Silvia

(56) Entgegenhaltungen:
- WO-A1-2008/136493
- WO-A1-2011/106523
- WO-A1-2014/001172

## Beschreibung

Die Erfindung betrifft ein Verfahren zum Verspleißen von vorimprägnierten Verstärkungsfasern. Ferner betrifft die Erfindung ein bandförmiges Verbundmaterialhalbzeug, das verspleißte vorimprägnierte Verstärkungsfasern enthält. Schließlich betrifft die Erfindung, ein Verfahren zur Herstellung eines Verbundmaterials aus einem derartigen Verbundmaterialhalbzeug sowie ein entsprechend des Verbundmaterial.

Bei der Herstellung von Flugzeugen werden vermehrt Verbundmaterialien eingesetzt. Flugzeugkomponenten aus Verbundmaterialen werden üblicherweise aus Verbundmaterial-Halbzeugen hergestellt, die häufig aus sogenannten Prepregs, d.h. aus vorimprägnierten Verstärkungsfasern, wie z.B. vorimprägnierten Kohlenstofffasern bestehen, welche in mehreren Materiallagen übereinander angeordnet sein können. Die Verstärkungsfasern können als unidirektionale Schicht(en), als Gewebe oder als Gelege vorliegen. Zur Herstellung einer Verbundmaterialkomponente aus einem Verbundmaterial-Halbzeug kann die die Verstärkungsfasern umgebende Matrix unter Temperatur und Druck ausgehärtet werden. Häufig wird ein Strangziehverfahren (auch Pultrusionsverfahren oder pultrudieren) eingesetzt, welches ein kontinuierliches Herstellungsverfahren zur Fertigung von faserverstärkten Kunststoffprofilen ist. Die Matrix kann beispielsweise aus einem ungehärteten duroplastischen Polymermaterial bestehen. Die Matrix kann sich jedoch auch in einem teilvernetzten Zustand befinden und pastös bis fest sein. Ferner kann die Matrix aus einem Material bestehen, das durch Erwärmung wieder verflüssigt werden kann.

Das Verbundmaterial-Halbzeug kann aus einem Laminat mit mehreren Schichten oder Materiallagen bestehen. Solche Laminate können durch automatisierte Techniken, wie z.B. automatisiertes Tapelegen, ATL (Automated Tape Laying), automatisierte Faserpositionierung, AFP (Automated Fiber Placement) oder manuelle Laminier-Techniken hergestellt werden.

Die vorimprägnierten Verstärkungsfasern werden häufig schlauchförmig oder bandförmig eingesetzt, wobei die Schläuche oder Bänder auf Spulen aufgewickelt sind. Eine Vielzahl von Spulen mit vorimprägnierten Verstärkungsfasern können z.B. in Faser-Lay-Up Verfahren (FLU) zu Bauteilen wie z.B. T-Stringern verarbeitet werden, die im Flugzeugbau zum Einsatz kommen. Um Unterbrechungen im Material, sowie unnötige Unterbrechungen und Verzögerungen des Herstellungsprozesses zu verhindern, werden die Spulen ausgetauscht, bevor sie leer sind, d.h. bevor das komplette Spulenmaterial verbraucht wurde. In der Praxis werden z.B. mehrere Spulen in einem FLU-Verfahren eingesetzt und sobald eine Spule leer ist, das Verfahren gestoppt und alle Spulen ausgetauscht. Die ausgetauschten Spulen weisen noch unverbrauchtes Rest-Material auf. Das Rest-Material auf den Spulen, bzw. die Spulenreste sind zu kurz, um weiter verwendet werden zu können und werden daher verworfen.

WO 2011/106523 A1 offenbart Verfahren zum Verspleißen von Verstärkungsfasern, in welchem Endbereiche von Bändern beschnitten werden und so angeordnet werden, dass Endbereiche der Bänder sich gegenüberliegen und überlappen, und danach verspleißt werden.

Die Erfindung ist auf die Aufgabe gerichtet, ein Verfahren zum Verspleißen von vorimprägnierten Verstärkungsfasern bereitzustellen, das es ermöglicht, in Form von Bändern vorliegende vorimprägnierte Verstärkungsfasern so miteinander zu verbinden, dass die miteinander verbundenen Verstärkungsfaserbänder zu qualitativ hochwertigen Verbundmaterialbauteilen weiterverarbeitet werden können. Ferner ist die Erfindung auf die Aufgabe gerichtet, ein bandförmiges Verbundmaterialhalbzeug anzugeben, das verspleißte vorimprägnierte Verstärkungsfasern enthält. Darüber hinaus ist die Erfindung auf die Aufgabe gerichtet, ein Verfahren zur Herstellung eines Verbundmaterials aus einem derartigen Verbundmaterialhalbzeug sowie ein entsprechend des Verbundmaterial anzugeben.

Diese Aufgabe wird durch ein Verfahren gemäß Anspruch 1, ein Verbundmaterialhalbzeug gemäß Anspruch 7, ein Verfahren gemäß Anspruch 12 und ein Verbundmaterial gemäß Anspruch 13 gelöst.

Ein Verfahren zum Verspleißen von vorimprägnierten Verstärkungsfasern, das für ein besseres Verständnis der Offenbarung geeignet ist, umfasst die Schritte:
- Bereitstellen eines vorimprägnierten Verstärkungsfasern umfassenden ersten Bands,
- Beschneiden eines Endbereichs des ersten Bands,
- Bereitstellen eines vorimprägnierten Verstärkungsfasern umfassenden zweiten Bands,
- Beschneiden eines Endbereichs des zweiten Bands,
   Anordnen des ersten und zweiten Bands derart, dass der Endbereich des ersten Bands dem Endbereich des zweiten Bands gegenüberliegt und der Endbe reich des ersten Bands den Endbereich des zweiten Bands zumindest teilweise überlappt, und
- Verspleißen von Verstärkungsfasern des ersten Bands mit den Verstärkungsfasern des zweiten Bands in mindestens einem Überlappungsbereich des Endbereichs des ersten Bands mit dem Endbereich des zweiten Bands.

Dabei kann der Endbereich des ersten Bands über oder unter dem Endbereich des zweiten Bands liegen.

Ein weiteres Verfahren zum Verspleißen von vorimprägnierten Verstärkungsfasern, das für ein besseres Verständnis der Offenbarung geeignet ist, umfasst die Schritte:
- Bereitstellen eines vorimprägnierte Verstärkungsfasern umfassenden ersten Bands,
- Beschneiden eines Endbereichs des ersten Bands derart, dass zumindest ein Abschnitt eines stirnseitigen Rands des ersten Bands mit einem ersten Seitenrand des ersten Bands einen Winkel von 10-80° bildet,
- Bereitstellen eines vorimprägnierte Verstärkungsfasern umfassenden zweiten Bands,
- Beschneiden eines Endbereichs des zweiten Bands derart, dass zumindest ein Abschnitt eines stirnseitigen Rands des zweiten Bands mit einem ersten Seitenrand des zweiten Band einen Winkel von 10-80° bildet,
- Anordnen des ersten und des zweiten Bands derart, dass der Endbereich des ersten Bands dem Endbereich des zweiten Bands gegenüberliegt und der Endbereich des ersten Bands den Endbereich des zweiten Bands zumindest teilweise überlappt, und
- Verspleißen von Verstärkungsfasern des ersten Bands mit Verstärkungsfasern des zweiten Bands in einem Überlappungsbereich des Endbereichs des ersten Bands mit dem Endbereich des zweiten Bands.

Unter dem Begriff "Verspleißen" wird hier verstanden, dass die Enden von Verstärkungsfasern des ersten Bands in dem Überlappungsbereich des Endbereich des ersten Bands mit dem Endbereich des zweiten Bands mit Enden von Verstärkungsfasern des zweiten Bands verbunden werden. Dadurch werden das erste und das zweite Band miteinander verbunden. Im Gegensatz zu Spleiß-Vorgängen mit trockenem Tauwerk, Seilen oder nicht-imprägnierten Verstärkungsfasern müssen die Enden nicht miteinander verflochten oder verdreht werden, oder sogar mit einem zusätzlichen Verbindungsmaterial beschichtet werden. Da die Verstärkungsfasern der vorliegenden Offenbarung mit einem Material, wie z.B. einem Epoxy-Harz, imprägniert sind, können die Enden durch übereinanderlegen der Enden und leichtes Anwenden von Druck oder Temperatur miteinander verspleißt werden. Das Imprägnierungsmittel, wie z.B. ein Epoxy-Harz, ist viskos und weist adhäsive Eigenschaften auf. Aufgrund der Viskosität kann das Imprägnierungsmittel fließen und die Enden von imprägnierten Verstärkungsfasern miteinander verbinden. Darüber hinaus unterstützt das Im prägnierungsmittel aufgrund seiner adhäsiven Eigenschaften den Verbindungsschritt. Bevorzugt kann der Überlappungsbereich des Endbereichs des ersten Bands mit dem Endbereich des zweiten Bands während des Verspleißens der vorimprägnierten Verstärkungsfasern einem erhöhten Druck oder einer erhöhten Temperatur ausgesetzt werden.

Eine neue Spule mit vorimprägnierten Verstärkungsfasern kann bis zu 500 m bandförmiges Material aufweisen. Eine Bandbreite kann zum Beispiel z.B. 12,7 mm, eine Materialdicke 0,183 mm und ein Flächengewicht 268 g/m² betragen (z.B. Material Prepreg M21E). Üblicherweise werden bei der Herstellung von Flugzeugbauteilen, wie z.B. T-Stringern mehrere Spulen parallel eingesetzt, um genügend Material für die Herstellung der Flugzeugbauteile zu liefern. Um während der Bauteilherstellung eine unterbrechungsfreie Materialzufuhr zu gewährleisten, werden die jeweiligen Spulen ausgetauscht, bevor das Ende erreicht ist. Die ausgetauschten Spulen weisen etliche Meter, in der Praxis bis zu 10 ± 5m, an Restmaterial auf. Um Bauteile, wie z.B. T-Stringer herzustellen, werden bis zu 90 Spulen-Austausche vorgenommen. Damit liegen bis zu 450-1350 m Restmaterial vor, wobei die jeweiligen 10 ± 5m Reste zu kurz sind, um weiterverarbeitet werden zu können und verworfen werden müssten. Das Verspleißen der in den Spulenresten enthaltenen Verstärkungsfasern ermöglicht somit eine Weiterverwendung der Spulenreste.

Ferner ermöglicht es das Verfahren zum Verspleißen von vorimprägnierte Verstärkungsfasern durch die Gestaltung der Endbereiche des ersten und des zweiten Bands, eine Materialverdopplung in den Endbereich der Bänder zu reduzieren oder gar ganz zu verhindern. Bei der Weiterverarbeitung der Bänder zu Verbundmaterialkomponenten, beispielsweise im Rahmen eines kontinuierlichen Verfahrens, kann demzufolge die in den Bändern enthaltene Materialmenge besonders genau kontrolliert werden. Die miteinander verbundenen Verstärkungsfaserbänder können daher zu qualitativ hochwertigen Verbundmaterialbauteilen weiterverarbeitet werden.

In einer bevorzugten Ausführungsform des Verfahrens wird der Endbereich des ersten Bands derart beschnitten, dass zumindest ein Abschnitt des stirnseitigen Rands des ersten Bands mit dem ersten Seitenrand des ersten Bands einen Winkel von 15-75°, stärker bevorzugt einen Winkel von 20-70°, stärker bevorzugt einen Winkel von 25-55°, und insbesondere bevorzugt einen Winkel von ca. 30° bildet. Entsprechend kann der Endbereich des zweiten Bands derart beschnitten, dass zumindest ein Abschnitt des stirnseitigen Rands des zweiten Bands mit dem ersten Seitenrand des zweiten Bands einen Winkel von 15-75°, stärker bevorzugt einen Winkel von 20-70°, stärker bevorzugt einen Winkel von 25-55°, und insbesondere bevorzugt einen Winkel von ca. 30° bildet.

Der Winkel, den zumindest ein Abschnitt des stirnseitigen Rands des ersten Bands mit einem ersten Seitenrand des ersten Bands bildet, ist bevorzugt gleich dem Winkel, den zumindest ein Abschnitt des stirnseitigen Rands des zweiten Bands mit dem ersten Seitenrand des zweiten Bands bildet.

Bei dem Verfahren zum Verspleißen von vorimprägnierten Verstärkungsfasern werden das erste und das zweite Band derart angeordnet, dass eine Fläche des Überlappungsbereichs des Endbereichs des ersten Bands mit dem Endbereich des zweiten Bands einer Fläche eines infolge der Beschneidung des Endbereichs des ersten Bands und des Endbereichs des zweiten Bands freibleibenden Bereichs entspricht. Wenn sich die Flächen des Überlappungsbereichs und des freibleibenden Bereichs entsprechen, d.h. wenn die Flächen identisch sind, wird die Materialverdopplung, die in dem Überlappungsbereich vorliegt durch den freibleibenden Bereich vollständig ausgeglichen. Die miteinander verbundenen Verstärkungsfaserbänder können dann problemlos zu qualitativ besonders hochwertigen Verbundmaterialbauteilen weiterverarbeitet werden.

Der Endbereich des ersten Bands wird derart beschnitten, dass der gesamte stirnseitige Rand des ersten Bands mit dem ersten Seitenrand des ersten Bands einen Winkel von 10-80° bildet. Alternativ oder zusätzlich dazu kann der Endbereich des zweiten Bands derart beschnitten werden, dass der gesamte stirnseitige Rand des zweiten Bands mit dem ersten Seitenrand des zweiten Bands einen Winkel von 10-80° bildet. Eine derartige Beschneidung des ersten und des zweiten Bands ist besonders einfach zu bewerkstelligen.

In einer bevorzugten Ausführungsform des Verfahrens wird der Endbereich des ersten Bands derart beschnitten, dass der gesamte stirnseitige Rand des ersten Bands mit dem ersten Seitenrand des ersten Bands einen Winkel von 15-75°, stärker bevorzugt einen Winkel von 20-70°, stärker bevorzugt einen Winkel von 25-55°, und insbesondere bevorzugt einen Winkel von ca. 30° bildet. Entsprechend kann der Endbereich des zweiten Bands derart beschnitten, dass der gesamte stirnseitige Rand des zweiten Bands mit dem ersten Seitenrand des zweiten Bands einen Winkel von 15-75°, stärker bevorzugt einen Winkel von 20-70°, stärker bevorzugt einen Winkel von 25-55°, und insbesondere bevorzugt einen Winkel von ca. 30° bildet.

Das erste und das zweite Band können derart angeordnet werden, dass der Überlappungsbereich an den ersten Seitenrand des ersten Bands und an den ersten Seitenrand des zweiten Bands angrenzt, und der freibleibende Bereich an einen zweiten Seitenrand des ersten Bands und an einen zweiten Seitenrand des zweiten Bands angrenzt. Eine derartige Anordnung der beiden Bänder relativ zueinander ist vergleichsweise einfach zu realisieren und kann auch gut so gestaltet werden, dass die Fläche des Überlappungsbereichs und die Fläche des frei bleibenden Bereichs einander entsprechen.

Ferner kann der Endbereich des ersten Bands derart beschnitten werden, dass ein erster Abschnitt des stirnseitigen Rands des ersten Bands mit dem ersten Seitenrand des ersten Band einen Winkel von 10-80° bildet und ein zweiter Abschnitt des stirnseitigen Rands des ersten Bands mit dem zweiten Seitenrand des ersten Bands einen Winkel von 10-80° bildet. Alternativ oder zusätzlich dazu kann der Endbereich des zweiten Bands derart beschnitten wird, dass ein erster Abschnitt des stirnseitigen Rands des zweiten Bands mit dem ersten Seitenrand des zweiten Bands einen Winkel von 10-80° bildet und ein zweiter Abschnitt des stirnseitigen Rands des zweiten Bands mit dem zweiten Seitenrand des zweiten Bands einen Winkel von 10-80° bildet. Bevorzugt erhält/erhalten der Endbereich des ersten Bands und/oder der Endbereich des zweiten Bands durch eine derartige Beschneidung eine Schwalbenschwanzform.

In einer bevorzugten Ausführungsform des Verfahrens wird der Endbereich des ersten Bands derart beschnitten, dass der erste Abschnitt des stirnseitigen Rands des ersten Bands mit dem ersten Seitenrand des ersten Band einen Winkel von 15-70°, stärker bevorzugt einen Winkel von 15-50°, und insbesondere bevorzugt einen Winkel von ca. 20° bildet und der zweite Abschnitt des stirnseitigen Rands des ersten Bands mit dem zweiten Seitenrand

des ersten Bands einen Winkel von 15-70°, stärker bevorzugt einen Winkel von 15-50°, und insbesondere bevorzugt einen Winkel von ca. 20° bildet. Entsprechend kann der Endbereich des zweiten Bands derart beschnitten, dass der erste Abschnitt des stirnseitigen Rands des zweiten Bands mit dem ersten Seitenrand des ersten Band einen Winkel von 15-70°, stärker bevorzugt einen Winkel von 15-50°, und insbesondere bevorzugt einen Winkel von ca. 20° bildet und der zweite Abschnitt des stirnseitigen Rands des zweiten Bands mit dem zweiten Seitenrand des zweiten Bands einen Winkel von 20-70°, stärker bevorzugt einen Winkel von 15-50°, und insbesondere bevorzugt einen Winkel von ca. 30° bildet.

Das erste und das zweite Band können derart angeordnet werden, dass ein erster Abschnitt des Überlappungsbereichs an den ersten Seitenrand des ersten Bands und an den ersten Seitenrand des zweiten Bands angrenzt und ein zweiter Abschnitt des Überlappungsbereichs an den zweiten Seitenrand des ersten Bands und an den zweiten Seitenrand des zweiten Bands angrenzt. Ferner können das erste und das zweite Band derart angeordnet werden, dass der freibleibende Bereich zwischen dem ersten Abschnitt des Überlappungsbereichs und dem zweiten Abschnitt des Überlappungsbereichs angeordnet ist. Durch eine derartige Beschneidung und Anordnung der Bänder kann erreicht werden, dass im Bereich der Seitenränder der Bänder keine offenen Enden von Verstärkungsfasern vorhanden sind, welche bei der Weiterverarbeitung der miteinander verbundenen Bänder, z.B. durch einen Pultrusionsprozess, an einer formgebenden Matrize hängen bleiben können.

Grundsätzlich ist es möglich, lediglich Bänder miteinander zu verbinden, deren Endbereiche so beschnitten sind, dass die gesamten stirnseitigen Ränder der Bänder mit den entsprechenden ersten Seitenrändern der Bänder einen entsprechenden Winkel bilden. Alternativ dazu ist es jedoch auch denkbar, ein Band, dessen Endbereich so geschnitten ist, dass sein gesamter stirnseitiger Rand mit dem ersten Seitenrand des Bands einen entsprechenden Winkel bildet, mit einem Band zu verbinden, dessen Endbereich so beschnitten ist, dass er, wie oben beschrieben, zwei Abschnitte hat, von denen einer einen entsprechenden Winkel mit dem ersten Seitenrand des Bands bildet, während der andere einen entsprechenden Winkel mit dem zweiten Seitenrand des Bands bildet. Es versteht sich, dass ein Band auch unterschiedlich beschnittene Endbereich haben kann.

In einer Ausführungsform des Verfahrens wird der Endbereich des ersten Bands derart beschnitten, dass er wenigstens einen materialfreien Bereich aufweist und/oder der Endbereich des zweiten Bands wird derart beschnitten, dass er wenigstens einen materialfreien Bereich aufweist.

In einer Ausführungsform des Verfahrens ist der materialfreie Bereich rechteckförmig.

In einer Ausführungsform des Verfahrens ist der materialfreie Bereich fransig.

Durch die materialfreien Bereiche wird erreicht, dass die Verbindung der beiden Bänder ein weitgehend konstantes Volumen aufweist. So verbundene Bänder lassen sich besonders gut mit Ablegemaschinen verarbeiten.

Ein bandförmiges Verbundmaterialhalbzeug, das für ein besseres Verständnis der Offenbarung geeignet ist, umfasst ein vorimprägnierte Verstärkungsfasern umfassendes erstes Band, dessen Endbereich beschnitten ist und ein vorimprägnierte Verstärkungsfasern umfassendes zweites Band, dessen Endbereich beschnitten ist. Das erste und das zweite Band sind derart angeordnet, dass der Endbereich des ersten Bands zumindest teilweise mit dem Endbereich des zweiten Bands überlappt. Verstärkungsfasern des ersten Bands sind mit den Verstärkungsfasern des zweiten Bands im Überlappungsbereich verspleißt.

Ein bandförmiges Verbundmaterialhalbzeug, das für ein besseres Verständnis der Offenbarung geeignet ist, umfasst ein vorimprägnierte Verstärkungsfasern umfassendes erstes Band, dessen Endbereich derart beschnitten ist, dass zumindest ein Abschnitt eines stirnseitigen Rands des ersten Bands mit einem ersten Seitenrand des ersten Bands einen Winkel von 10-80° bildet. Ferner umfasst das Verbundmaterialhalbzeug ein vorimprägnierte Verstärkungsfasern umfassendes zweites Band, dessen Endbereich derart beschnitten ist, dass ein Abschnitt eines stirnseitigen Rands des zweiten Bands mit einem ersten Seitenrand des zweiten Band einen Winkel von 10-80° bildet. Das erste und das zweite Band derart angeordnet, dass der Endbereich des ersten Bands dem Endbereich des zweiten Bands gegenüberliegt und der Endbereich des ersten Bands den Endbereich des zweiten Bands zumindest teilweise überlappt. Verstärkungsfasern des ersten Bands sind in einem Überlappungsbereich des Endbereich des ersten Bands mit dem Endbereich des zweiten Bands mit Verstärkungsfasern des zweiten Bands verspleißt. Das erste und das zweite Band sind derart angeordnet, dass eine Fläche eines Überlappungsbereichs des Endbereichs des ersten Bands mit dem Endbereich des zweiten Bands einer Fläche eines freibleibenden Bereichs entspricht.

In dem Endbereich des ersten Bands kann der gesamte stirnseitige Rand des ersten Bands mit dem ersten Seitenrand des ersten Bands einen Winkel von 10-80° bilden. Alternativ oder zusätzlich dazu kann in dem Endbereich des zweiten Bands der gesamte stirnseitige Rand des zweiten Bands mit dem ersten Seitenrand des zweiten Bands einen Winkel von 10-80° bilden.

Das erste und das zweite Band sind vorzugsweise derart angeordnet, dass der Überlappungsbereich an den ersten Seitenrand des ersten Bands und an den ersten Seitenrand des zweiten Bands angrenzt. Der freibleibende Bereich kann an den zweiten Seitenrand des ersten Bands und an den zweiten Seitenrand des zweiten Bands angrenzen.

In dem Endbereich des ersten Bands kann ein erster Abschnitt des stirnseitigen Rands des ersten Bands mit dem ersten Seitenrand des ersten Bands einen Winkel von 10-80° bilden. Ein zweiter Abschnitt des stirnseitigen Rands des ersten Bands kann dagegen mit dem zweiten Seitenrand des ersten Bands einen Winkel von 10-80° bilden. Zusätzlich oder alternativ dazu kann in dem Endbereich des zweiten Bands ein erster Abschnitt des stirnseitigen Rands des zweiten Bands mit dem ersten Seitenrand des zweiten Bands einen Winkel von 10-80° bilden. Ein zweiter Abschnitt des stirnseitigen Rands des zweiten Bands kann dagegen mit dem zweiten Seitenrand des zweiten Bands einen Winkel von 10-80° bilden.

Das erste und das zweite Band können derart angeordnet sein, dass ein erster Abschnitt des Überlappungsbereichs an den ersten Seitenrand des ersten Bands und an den ersten Seitenrand des zweiten Bands angrenzt. Ein zweiter Abschnitt des Überlappungsbereichs kann an den zweiten Seitenrand des ersten Bands und an den zweiten Seitenrand des zweiten Bands angrenzen. Der freibleibende Bereich kann zwischen dem ersten Abschnitt des Überlappungsbereichs und dem zweiten Abschnitt des Überlappungsbereichs angeordnet sein.

Bei einem Verfahren zum Herstellen eines Verbundmaterials wird ein oben beschriebenes bandförmiges Verbundmaterialhalbzeug zu einem Verbundmaterial verarbeitet. Die Verarbeitung des Verbundmaterialhalbzeugs zu einem Verbundmaterial kann zum Beispiel durch ein Strangziehverfahren (auch Pultrusionsverfahren oder pultrudieren) erfolgen, welches ein kontinuierliches Herstellungsverfahren zur Fertigung von faserverstärkten Kunststoffprofilen ist.

Ein Verbundmaterial ist aus einem oben beschriebenen bandförmigen oder Verbundmaterialhalbzeug nach einem oben beschriebenen Verfahren zur Weiterverarbeitung des Verbundmaterial Halbzeugs hergestellt.

Bevorzugt ist das Verbundmaterial ein Zwickelfüller (Englisch: gusset filler), welcher in der Lücke zweier L-Laminate, die einen T-Stringer zusammensetzen, eingesetzt werden kann.

Bevorzugte Ausführungsformen der Erfindung werden im Folgenden mit Bezugnahme auf die beigefügten schematischen Zeichnungen näher erläutert.
- Figuren 1a und b: zeigen ein Verfahren zum Verspleißen von vorimprägnierten Verstärkungsfasern, das zur Herstellung eines bandförmigen Verbundmaterialhalbzeugs geeignet ist.
- Figuren 2a und b: zeigen ein alternatives Verfahren zum Verspleißen von vorimprägnierten Verstärkungsfasern, das ebenfalls zur Herstellung eines bandförmigen Verbundmaterialhalbzeugs.
- Figuren 3a und b: zeigen ein drittes Verfahren zum Verspleißen von vorimprägnierten Verstärkungsfasern, das zur Herstellung eines bandförmigen Verbundmaterialhalbzeugs geeignet ist.
- Figuren 4a und b: zeigen ein viertes Verfahren zum Verspleißen von vorimprägnierten Verstärkungsfasern, das ebenfalls zur Herstellung eines bandförmigen Verbundmaterialhalbzeugs geeignet ist.
- Figuren 5a und b: zeigen ein fünftes Verfahren zum Verspleißen von vorimprägnierten Verstärkungsfasern, welches zur Herstellung eines bandförmigen Verbundmaterialhalbzeugs geeignet ist.
- Figuren 6a und b: zeigen ein sechstes Verfahren zum Verspleißen von vorimprägnierten Verstärkungsfasern, das zur Herstellung eines bandförmigen Verbundmaterialhalbzeugs geeignet ist.
- Figuren 7a und b: zeigen ein siebtes Verfahren zum Verspleißen von vorimprägnierten Verstärkungsfasern, das auch zur Herstellung eines bandförmigen Verbundmaterialhalbzeugs geeignet ist.
- Figur 8: zeigt weitere Ausführungsformen der Endbereiche von vorimprägnierten Verstärkungsfasern, die zur Herstellung eines bandförmigen Verbundmaterialhalbzeugs geeignet sind.
- Figur 9: zeigt eine weiter Ausführungsform der Endbereiche von vorimprägnierten Verstärkungsfasern, die zur Herstellung eines bandförmigen Verbundmaterialhalbzeugs geeignet ist.

Zur Herstellung von Flugzeugbauteilen aus faserverstärkten Verbundwerkstoffen können in Bandform auf Spulen aufgewickelte vorimprägnierte Verstärkungsfasern verwendet werden. Um während der Bauteilherstellung eine unterbrechungsfreie Materialzufuhr zu gewährleisten, werden die jeweiligen Spulen ausgetauscht, bevor das Ende der auf die Spulen aufgewickelten Verstärkungsfasern erreicht ist. Dementsprechend fallen vergleichsweise große Restmengen an vorimprägnierte Verstärkungsfasern an.

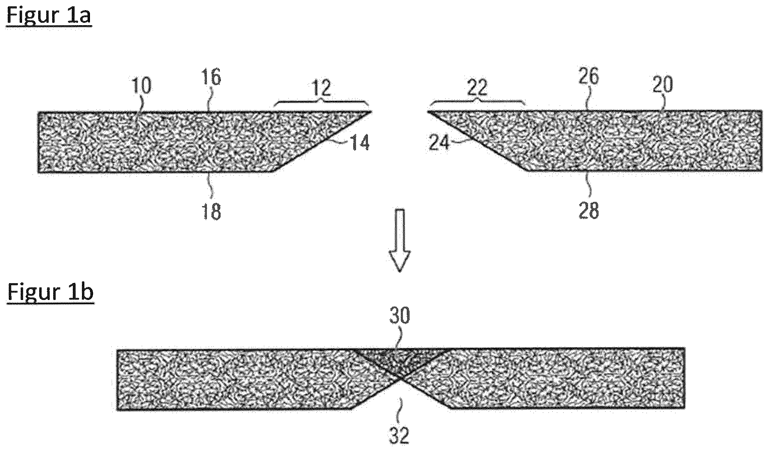

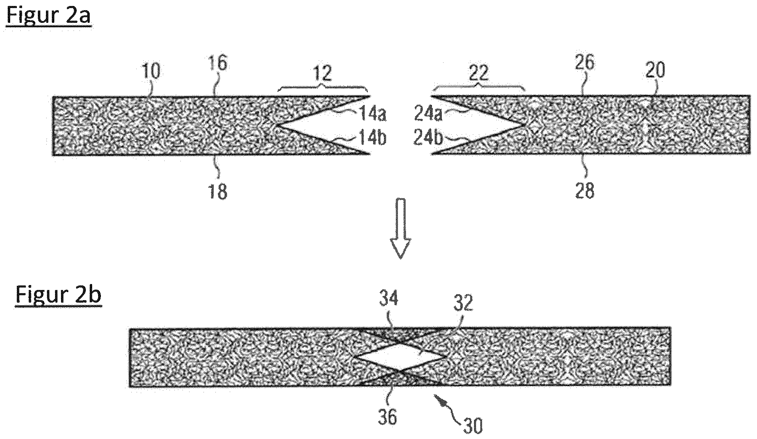

Um eine weitere Verwertung dieser Verstärkungsfasern zu ermöglichen, werden die vorimprägnierte Verstärkungsfasern, wie in den Figuren 1 und 2 veranschaulicht, verspleißt. Bei dem hier gezeigten Verfahren zum verspleißen von vorimprägnierten Verstärkungsfasern wird ein vorimprägnierte Verstärkungsfasern umfassendes erstes Band 10 bereitgestellt. Ferner wird ein vorimprägnierte Verstärkungsfasern umfassendes zweites Band 20 bereitgestellt. Ein Endbereich 12 des ersten Bands derart beschnitten, dass zumindest ein Abschnitt eines stirnseitigen Rands 14 des ersten Bands 10 mit einem ersten Seitenrand 16 des ersten Bands 10 einen Winkel von 10-80° bildet. Ferner wird ein Endbereich 22 des zweiten Bands 20 derart beschnitten, dass zumindest ein Abschnitt eines stirnseitigen Rands 24 des zweiten Bands 20 mit einem ersten Seitenrand 26 des zweiten Band 20 einen Winkel von 10-80° bildet.

Bei der in den Figuren 1a und b gezeigten Variante des Verfahrens wird der Endbereich 12 des ersten Bands 10 derart beschnitten, dass der gesamte stirnseitige Rand 12 des ersten Bands 10 mit dem ersten Seitenrand 16 des ersten Bands 10 einen Winkel von 10-80° bildet. Der Endbereich 22 des zweiten Bands 20 wird derart beschnitten, dass der gesamte stirnseitige Rand 24 des zweiten Bands 20 mit dem ersten Seitenrand 26 des zweiten Bands 20 einen Winkel von 10-80° bildet. Insbesondere werden der Endbereich 12 des ersten Bands 10 und der Endbereich 22 des zweiten Bands 20 derart beschnitten, dass die Endbereiche 12, 22 in eine Dreiecksform gebracht werden.

In dem in den Figuren 1a und b veranschaulichen konkreten Ausführungsbeispiel bildet der stirnseitige Rand 12 des ersten Bands 10 mit dem ersten Seitenrand 16 des ersten Bands 10 einen Winkel von ca. 30°. In ähnlicher Weise bildet der stirnseitige Rand 24 des zweiten Bands 20 mit dem ersten Seitenrand 26 des zweiten Bands 20 einen Winkel von ca. 30°. Im Gegensatz dazu wird bei der in den Figuren 2a und b gezeigten Variante des Verfahrens der Endbereich 12 des ersten Bands 10 derart beschnitten, dass ein erster Abschnitt 14a des stirnseitigen Rands 14 des ersten Bands 10 mit dem ersten Seitenrand 16 des ersten Bands 10 einen Winkel von 10-80° bildet und ein zweiter Abschnitt 12b des stirnseitige Rands 14 des ersten Bands 10 mit einem zweiten Seitenrand 18 des ersten Bands 10 einen Winkel von 10-80° bildet. Insbesondere werden der Endbereich 12 des ersten Bands 10 und der Endbereich 22 des zweiten Bands 20 derart beschnitten, dass die Endbereiche 12, 22 in eine Schwalbenschwanzform gebracht werden.

In dem in den Figuren 2a und b veranschaulichen konkreten Ausführungsbeispiel bilden der erste und der zweite Abschnitt 14a, 14b des stirnseitigen Rands 14 des ersten Bands 10 mit den entsprechenden Seitenrändern 16, 18 des ersten Bands 10 einen Winkel von ca. 30°. Der Endbereich 22 des zweiten Bands 20 wird derart beschnitten, dass ein erster Abschnitt 22a des stirnseitigen Rands 22 des zweiten Bands 20 mit dem ersten Seitenrand 26 des ersten Bands 10 einen Winkel von 10-80° bildet und ein zweiter Abschnitt 22b des stirnseitige Rands 24 des zweiten Bands 20 mit einem zweiten Seitenrand 28 des zweiten Bands 20 einen Winkel von 10-80° bildet. In dem in den Figuren 2a und b veranschaulichen konkreten Ausführungsbeispiel bilden der erste und der zweite Abschnitt 24a, 24b des stirnseitigen Rands 24 des zweiten Bands 20 mit den entsprechenden Seitenrändern 26, 28 des zweiten Bands 20 einen Winkel von ca. 30°.

Nach dem Beschneiden der Endbereiche 12, 22 werden das erste und das zweite Band 10, 20 derart angeordnet, dass der Endbereich 12 des ersten Bands 10 dem Endbereich 22 des zweiten Bands 20 gegenüberliegt und der Endbereich 12 des ersten Bands 10 den Endbereich 22 des zweiten Bands 20 zumindest teilweise überlappt. Bei der in den Figuren 1a und b gezeigten Variante des Verfahrens werden das erste und das zweite Band 10, 20 derart angeordnet, dass der Überlappungsbereich 30 an den ersten Seitenrand 16 des ersten Bands 10 und an den ersten Seitenrand 26 des zweiten Bands 20 angrenzt. Ein freibleibender, d.h. materialfreier Bereich 32 grenzt dagegen an den zweiten Seitenrand 18 des ersten Bands 10 und an den zweiten Seitenrand 28 des zweiten Bands 20 an.

Bei der in den Figuren 2a und b gezeigten Variante des Verfahrens werden das erste und das zweite Band 10, 20 dagegen derart angeordnet, dass ein erster Abschnitt 34 des Überlappungsbereichs 30 an den ersten Seitenrand 16 des ersten Bands 10 und an den ersten Seitenrand 26 des zweiten Bands 20 angrenzt, während ein zweiter Abschnitt 36 des Überlappungsbereichs 30 an den zweiten Seitenrand 18 des ersten Bands 10 und an den zweiten Seitenrand 28 des zweiten Bands 20 angrenzt. Der freibleibende, d.h. materialfreie Bereich 32 ist zwischen dem ersten Abschnitt 34 des Überlappungsbereichs 30 und dem zweiten Abschnitt 36 des Überlappungsbereichs 30 angeordnet. Mit anderen Worten, der freibleibende Bereich 32 ist von dem ersten und dem zweiten Abschnitt 34, 36 des Überlappungsbereichs 30 umgeben so dass im Bereich der Seitenränder 16, 18, 26, 28 der Bänder 10, 20 keine freien Verstärkungsfaserenden vorhanden sind, die bei einer Weiterverarbeitung der miteinander verbundenen Bänder 10, 20 z.B. an einer formgebenden Matrize bleiben könnten.

Schließlich werden Verstärkungsfasern des ersten Bands 10 in einem Überlappungsbereich 30 des Endbereich 12 des ersten Bands 10 mit dem Endbereich 22 des zweiten Bands 20 mit Verstärkungsfasern des zweiten Bands 20 verspleißt. Im Gegensatz zu Spleiß-Vorgängen mit trockenem Tauwerk, Seilen oder nicht-imprägnierten Verstärkungsfasern müssen die Enden der Verstärkungsfasern des ersten und des zweiten Bands 10, 20 nicht miteinander verflochten oder verdreht, oder sogar mit einem zusätzlichen Verbindungsmaterial beschichtet werden. Vielmehr können die in dem ersten und dem zweiten Band 10, 20 enthaltenen Verstärkungsfasern, die mit einem Material, wie z.B. einem Epoxy-Harz, imprägniert sind, durch Übereinanderlegen ihrer Enden und anschließendes Aufbringen eines Drucks und/oder einer anschließenden Erhöhung der Temperatur auf einfache Art und Weise miteinander verspleißt werden. Das Imprägnierungsmittel, wie z.B. ein Epoxy-Harz, ist viskos und weist adhäsive Eigenschaften auf. Aufgrund der Viskosität kann das Imprägnierungsmittel fließen und die Enden von imprägnierten Verstärkungsfasern miteinander verbinden. Darüber hinaus unterstützt das Imprägnierungsmittel aufgrund seiner adhäsiven Eigenschaften den Verbindungsschritt.

Sowohl bei dem in den Figuren 1a und b als auch bei dem in den Figuren 2a und b veranschaulichten Verfahren werden das erste und das zweite Band 10, 20 derart angeordnet, dass eine Fläche des Überlappungsbereichs 30 des Endbereich 12 des ersten Bands 10 mit dem Endbereich 22 des zweiten Bands 20 einer Fläche eines infolge der Beschneidung des Endbereich 12 des ersten Bands 10 und des Endbereich 22 des zweiten Bands 20 freibleibenden Bereichs 32 entspricht. Dadurch wird die Materialverdopplung, die in dem Überlappungsbereich 30 vorliegt, durch den freibleibenden Bereich 32 vollständig ausgeglichen. Die miteinander verbundenen Verstärkungsfaserbänder 10, 20 können dann problemlos zu qualitativ besonders hochwertigen Verbundmaterialbauteilen weiterverarbeitet werden.

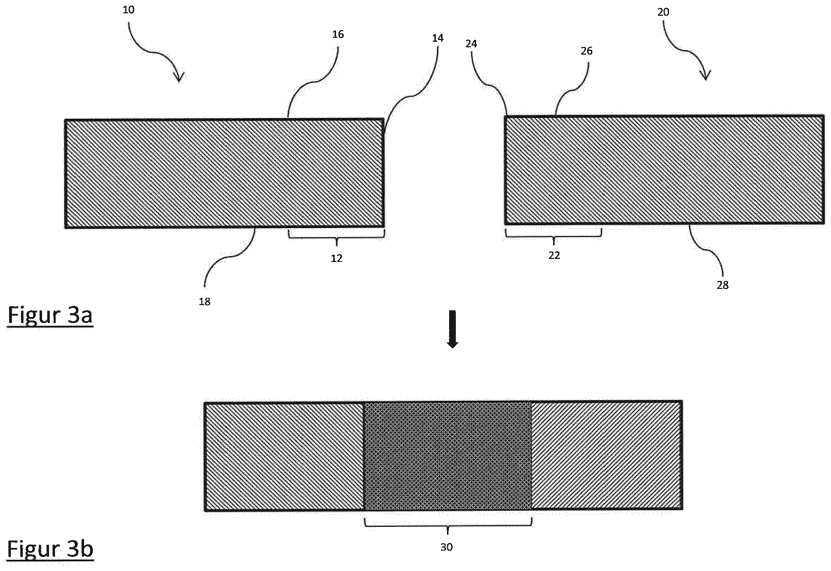

Die Figuren 3a und b zeigen ein erstes Verfahren zum Verspleißen von vorimprägnierten Verstärkungsfasern, wobei die Endbereiche 12, 22 des ersten und zweiten Bands 10, 20 eine im Wesentlichen rechteckförmige Kontur aufweisen. Der Endbereich 12 des ersten Bandes 10 wird über oder unter den Endbereich 22 des zweiten Bandes 20 gelegt. Die Ausrichtung des Überlappungsbereichs 30 der Endbereiche 12, 22 des ersten Bandes 10 und des zweiten Bandes 20 wird sichergestellt, indem der erste Seitenrand 16 des ersten Bandes 10 eine kongruente Lage zum ersten Seitenrand 26 des zweiten Bandes 20 einnimmt und gleichzeitig der zweite Seitenrand 18 des ersten Bandes 10 eine kongruente Lage zum zweiten Seitenrand 28 des zweiten Bandes 20 einnimmt. Es ist darauf zu achten, dass der erste stirnseitige Rand 14 des ersten Bandes 10 parallel zum ersten stirnseitigen Rand 24 des zweiten Bandes 20 ausgerichtet wird.

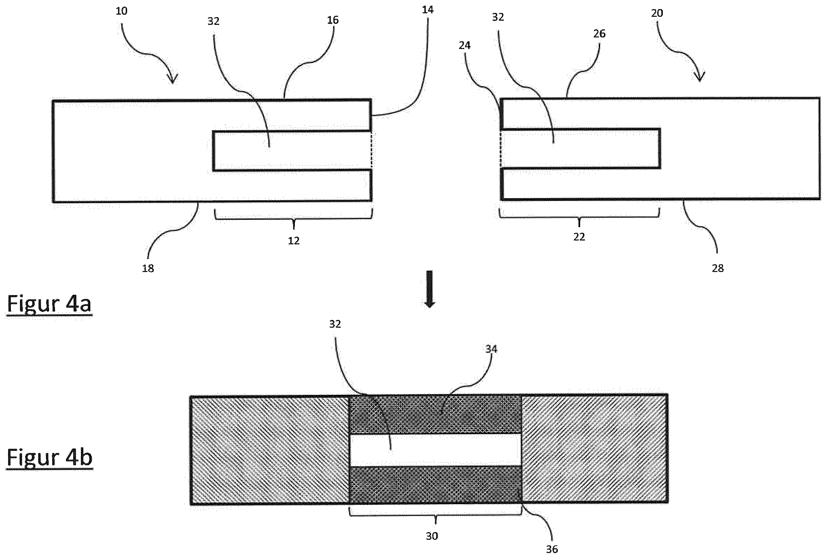

Die Figuren 4a und b zeigen ein zweites Verfahren zum Verspleißen von vorimprägnierten Verstärkungsfasern, wobei der Endbereich 12 des ersten Bands 10 einen im Wesentlichen rechteckförmigen materialfreien Bereich 32 aufweist, der sich parallel zum ersten und zweiten Seitenrand 16, 18 des ersten Bands 10, vom stirnseitigen Rand 14 ausgehend, ausdehnt. Analog dazu weist der Endbereich 22 des zweiten Bands 20 einen rechteckförmigen materialfreien Beriech 32 auf, der sich, ausgehend vom stirnseitigen Rand 24, parallel zu den Seitenrändern 26, 28 ausdehnt. Der Endbereich 12 des ersten Bandes 10 wird über oder unter den Endbereich 22 des zweiten Bandes 20 gelegt. Die Ausrichtung des Überlappungsbereichs 30 der Endbereiche 12, 22 des ersten Bandes 10 und des zweiten Bandes 20 wird sichergestellt, indem der erste Seitenrand 16 des ersten Bandes 10 eine kongruente Lage zum ersten Seitenrand 26 des zweiten Bandes 20 einnimmt und gleichzeitig der zweite Seitenrand 18 des ersten Bandes 10 eine kongruente Lage zum zweiten Seitenrand 28 des zweiten Bandes 20 einnimmt. Der freibleibende, d.h. materialfreie Bereich 32 ist zwischen dem ersten Abschnitt 34 des Überlappungsbereichs 30 und dem zweiten Abschnitt 36 des Überlappungsbereichs 30 angeordnet. Der materialfreie Bereich 32 ist von dem ersten und dem zweiten Abschnitt 34, 36 des Überlappungsbereichs 30 umgeben, sodass im Bereich der Seitenränder 16, 18, 26, 28 der Bänder 10, 20 keine freien Verstärkungsfaserenden vorhanden sind, die bei einer Weiterverarbeitung der miteinander verbundenen Bänder 10, 20 z.B. an einer formgebenden Matrize haften bleiben können. Der wesentliche Vorteil dieser Ausführungsform ist die gleichbleibende Materialdicke nach dem Verspleißen bei gleicher Materialbreite.

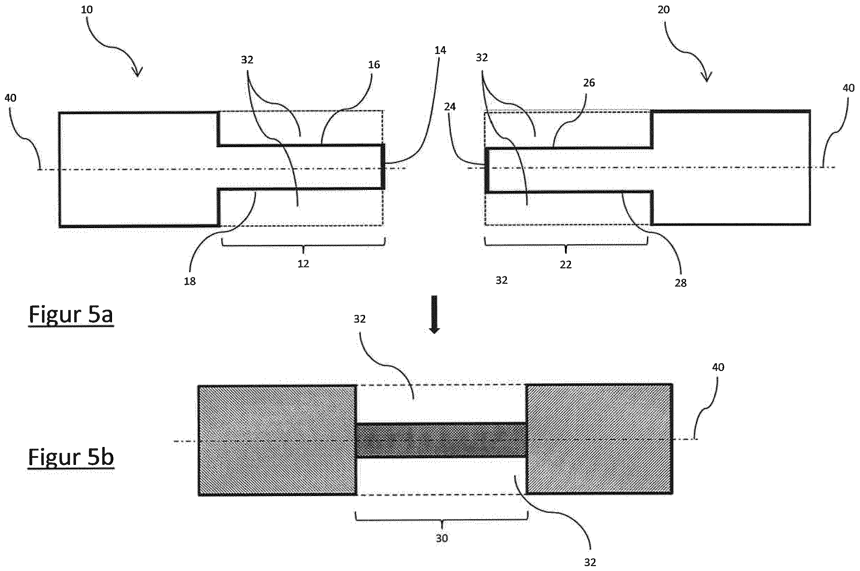

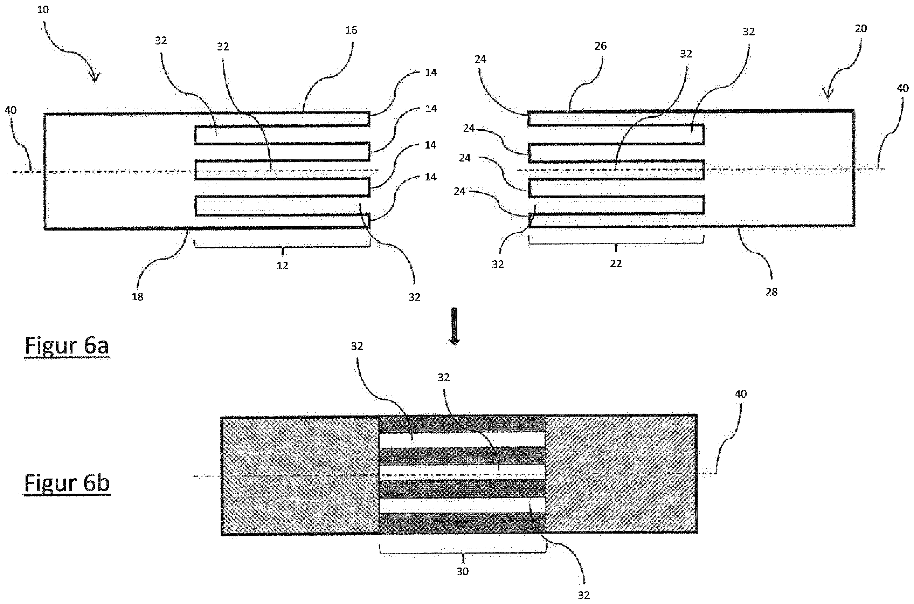

Die Figuren 5a und b zeigen ein drittes Verfahren zum Verspleißen von vorimprägnierten Verstärkungsfasern, wobei der Endbereich 12 des ersten Bands 10 materialfreie Bereiche 32 aufweist, die sich parallel zum ersten und zweiten Seitenrand 16, 18 im Wesentlichen in Richtung Mittellinie 40 des Bands 10 ausdehnen und den Endbereich 12 im Wesentlichen schmaler ausgestalten, als die Breite des Bands 10 ist. Der zweite Endbereich 22 des zweiten Bands 20 weist materialfreie Bereiche 32 auf, die sich parallel zum ersten und zweiten Seitenrand 26, 28 im Wesentlichen in Richtung Mittellinie 40 des Bands 20 ausdehnen und den Endbereich 22 im Wesentlichen schmaler ausgestalten, als die Breite des Bands 20 ist. Der Endbereich 12 des ersten Bands 10 wird über oder unter den Endbereich 22 des zweiten Bands 20 gelegt. Die Ausrichtung des Überlappungsbereichs 30 der Endbereiche 12, 22 des ersten Bandes 10 und des zweiten Bandes 20 wird sichergestellt, indem der erste Seitenrand 16 des ersten Bandes 10 eine kongruente Lage zum ersten Seitenrand 26 des zweiten Bandes 20 einnimmt und gleichzeitig der zweite Seitenrand 18 des ersten Bandes 10 eine kongruente Lage zum zweiten Seitenrand 28 des zweiten Bandes 20 einnimmt. Es ist darauf zu achten, dass der erste stirnseitige Rand 14 des ersten Bandes 10 parallel zum ersten stirnseitigen Rand 24 des zweiten Bandes 20 ausgerichtet wird. Ein Vorteil dieser Ausführungsform ist die gleichmäßige Verdrängung der vorimprägnierten Verstärkungsfasern im Wesentlichen parallel zur Mittellinie 40 in Richtung der Seitenränder 16, 18, 26, 28 während des Verspleißverfahrens. Die Figuren 6a und b zeigen ein viertes Verfahren zum Verspleißen von vorimprägnierten Verstärkungsfasern, wobei die Endbereiche 12, 22 des ersten und zweiten Bands 10, 20 im Wesentlichen rechteckförmige, materialfreie Bereiche 32 aufweisen. Die materialfreien Bereiche 32 des ersten und zweiten Bands 10, 20 verlaufen parallel zu den Seitenrändern 16, 18, 26, 28 des ersten und zweiten Bands 10, 20. Sie verteilen sich im Wesentlichen in gleichen Abständen von den Seitenrändern 16, 18, 26, 28 zur Mittellinie 40 des ersten und zweiten Bands 10, 20 hin und dehnen sich vom stirnseitigen Rand 14, 24 des ersten und zweiten Bands 10, 20 im Wesentlichen in Richtung des fortlaufenden Bands 10, 20 aus. Diese Ausführungsform der Endbereiche 12, 22 des ersten Bands 10 und des zweiten Bands 20 weist, im Vergleich zu Figur 2a und b mehrere Endbereiche 12, 22 auf. Die Endbereiche 12 des ersten Bands 10 werden über oder unter die Endbereiche 22 des zweiten Bands 20 gelegt. Die Ausrichtung der Überlappungsbereiche 30 der Endbereiche 12, 22 des ersten Bandes 10 und des zweiten Bandes 20 wird sichergestellt, indem der erste Seitenrand 16 des ersten Bandes 10 eine kongruente Lage zum ersten Seitenrand 26 des zweiten Bandes 20 einnimmt und gleichzeitig der zweite Seitenrand 18 des ersten Bandes 10 eine kongruente Lage zum zweiten Seitenrand 28 des zweiten Bandes 20 einnimmt. Der wesentliche Vorteil dieser Ausführungsform ist die gleichmäßige Verteilung der Verstärkungsfaserenden im Überlappungsbereich 30 nach dem Verspleißverfahren, welche eine gleichmäßige Belastung des verspleißten Überlappungsbereichs 30 gewährleistet.

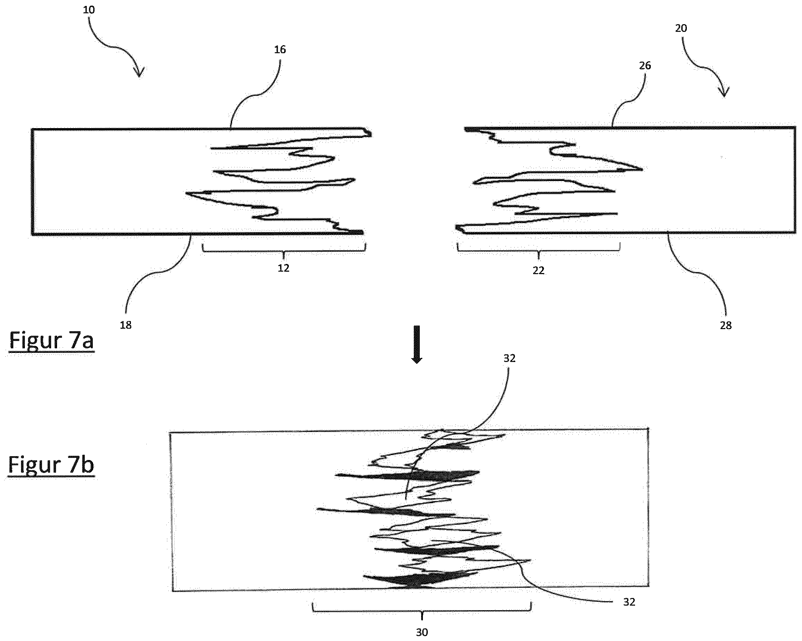

Die Figuren 7a und b zeigen ein fünftes Verfahren zum Verspleißen von vorimprägnierten Verstärkungsfasern, wobei die Endbereiche 12, 22 des ersten und zweiten Bands 10, 20 im Wesentlichen fransig sind. Die Verteilung und Ausgestaltung der materialfreien Bereiche 32 in den Endbereichen 12, 22 des ersten und zweiten Bands 10, 20 sind ungleichmäßig, d.h. ihre Länge, Lage und Form folgt keiner geordneten Struktur, wie z.B. bei Figur 4a und 4b. Die fransige Struktur der Endbereiche 12, 22 ist als ausgedünnt zu beschreiben. In den Endbereichen 12, 22 wurde also ungleichmäßig Material entfernt. Die Ausrichtung der Überlappungsbereiche 30 der Endbereiche 12, 22 des ersten Bandes 10 und des zweiten Bandes 20 wird sichergestellt, indem der erste Seitenrand 16 des ersten Bandes 10 eine im Wesentlichen kongruente Lage zum ersten Seitenrand 26 des zweiten Bandes 20 einnimmt und gleichzeitig der zweite Seitenrand 18 des ersten Bandes 10 eine im Wesentlichen kongruente Lage zum zweiten Seitenrand 28 des zweiten Bandes 20 einnimmt. Eine unregelmäßige Verteilung der Überlappungsbereiche 30 und der materialfreien Bereiche 32 ist die Folge der ausgefransten Endbereiche 12, 22 des ersten Bands 10 und des zweiten Bands 20. Ein wesentlicher Vorteil dieser Ausführungsform ist die feinere Verteilung der Verbindungen der Verstärkungsfaserenden.

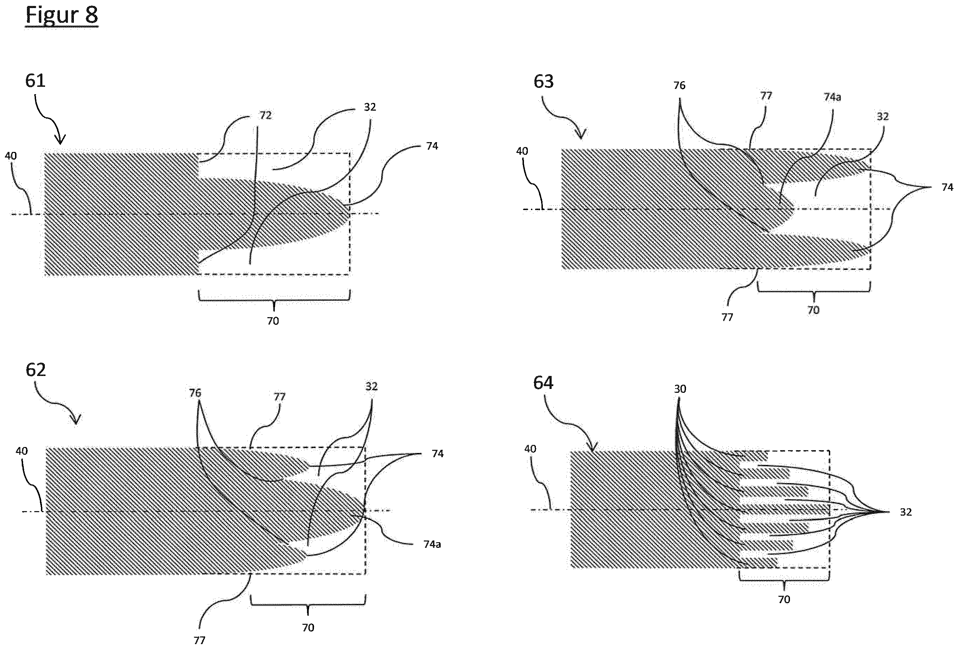

Figur 8 zeigt weitere Ausführungsformen der Endbereiche 12 und/oder 22. Im Weiteren werden die Endbereiche 12 und 20 als 70 bezeichnet.

Die erste Ausführungsform 61 weist im Wesentlichen eine zur Mittellinie 40 symmetrische, halbelliptische Kontur 74 für den Endbereich 70 mit zu den Seitenrändern senkrechten Flanken 72 auf. Die materialfreien Bereiche 32 gestalten sich derart, dass sie dort anschließen, wo der Endbereich 70 in seiner Kontur abschließt.

Die zweite Ausführungsform 62 weist im Wesentlichen drei halbelliptische Konturen des Endbereichs 70 auf. Hierbei ist eine lange halbelliptische Kontur 74a symmetrisch zur Mittellinie 40 angeordnet, welche gleichzeitig von zwei kurze halbelliptischen Konturen 74 flankiert wird, wobei der Übergang 76 von der langen halbelliptischen Kontur 74a zu einer kurzen halbelliptischen Kontur 74 spitzwinklig ausgestaltet ist und der Übergang 77 von den Seitenrändern zu den kurzen halbelliptischen Konturen 74 keinen oder kleine Winkel aufweist. Die materialfreien Bereiche 32 schließen dort an, wo die halbelliptischen Konturen 74 und 74a begrenzt sind.

Die dritte Ausführungsform 63 weist den Endbereich 70 mit im Wesentlichen drei halbelliptischen, zur Mittellinie symmetrisch angeordneten Konturen auf. Bei dieser Ausgestaltung wird eine kurze halbelliptische Kontur 74a von zwei langen halbelliptischen Konturen 74 flankiert. Die beiden langen halbelliptischen Konturen 74 begrenzen den materialfreien Bereich 32 oberhalb und unterhalb der Mittellinie 40, wohingegen die kurze halbelliptische Kontur 74a den materialfreien Bereich 32 in der Mitte begrenzt. Der Übergang 76 von der kurzen halbelliptischen Kontur 74a zu einer langen halbelliptischen Kontur 74 ist hierbei spitzwinklig ausgestaltet. Der Übergang 77 von den Seitenrändern zu den langen halbelliptischen Konturen 74 weist keinen oder kleine Winkel auf. Der materialfreie Bereich 32 ähnelt hierbei im Wesentlichen in seiner Außenform einem um 90-Grad nach rechts gedrehtem "W" mit konvexem Bauch.

Die vierte Ausführungsform 64 zeigt im Endbereich 70 eine im Wesentlichen kammartige Ausgestaltung. Hierbei wechseln sich mehrere materialfreien Bereiche 32 mit mehreren Überlappungsbereichen 30 ab. Die Länge der rechteckförmigen Ausgestaltung der materialfreien Bereiche 32 verringert sich von der Mittellinie 40 ausgehend, in Richtung der Seitenränder. Die Anordnung erfolgt symmetrisch zur Mittellinie 40 in gleichen Abständen.

Die rechteckförmige Ausgestaltung und Anordnung der Überlappungsbereiche 30 erfolgt analog dazu, wobei der Überlappungsbereich 30, der unmittelbar an die Mittellinie 40 anschließt, die maximale Ausdehnung vertikal zur Mittellinie aufweist und die Überlappungsbereiche 30 an den Seitenrändern die minimale Ausdehnung vertikal zur Mittellinie 40 aufweisen.

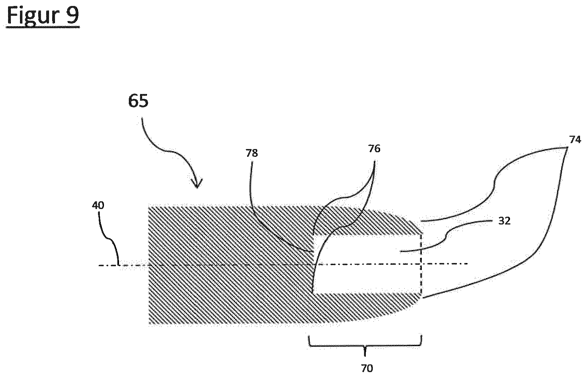

Figur 9 zeigt eine fünfte Ausführungsform 65. Die im Wesentlichen zangenartige Ausgestaltung des Endbereichs 70, ähnlich der Silhouette einer Hälfte eines stufenlos verstellbaren Schraubenschlüssels bei dem beide Spannbacken und der Schaft den materialfreien Bereich 32 dreiseitig begrenzen. Der materialfreie Bereich 32 wird hierbei oberhalb und unterhalb der Mittellinie 40 von zwei viertelelliptischen Konturen 74 und linksseitig von einer Senkrechten 78 zur Mittellinie 40 umschlossen. Der Übergang 76 von einer viertelelliptischen Kontur 74 zur Senkrechten 78 bildet einen 90-Grad Winkel aus.

Mittels der in den Figuren 1a und b bis Figur 7 gezeigten Verfahren zum Verspleißen von vorimprägnierten Verstärkungsfasern können aus den bandförmigen Verstärkungsfaserresten bandförmige Verbundmaterialhalbzeuge, die zur Weiterverarbeitung zu Verbundmaterialkomponenten, insbesondere Flugzeugkomponenten geeignet sind, hergestellt werden. Aus diesen Verbundmaterialhalbzeugen kann dann ein Verbundmaterial bzw. eine Verbundmaterialkomponente hergestellt werden.

### Bezugszeichenliste

- 10.: erstes Band
- 12.: Endbereich
- 14.: stirnseitiger Rand
- 14a.: erster Abschnitt
- 14b.: zweiter Abschnitt
- 16.: erster Seitenrand
- 18.: zweiter Seitenrand
- 20.: zweites Band
- 22.: Endbereich
- 22a.: erster Abschnitt
- 22b.: zweiter Abschnitt
- 24.: stirnseitiger Rand
- 24a.: erster Abschnitt
- 24b.: zweiter Abschnitt
- 26.: erster Seitenrand
- 28.: zweiter Seitenrand
- 30.: Überlappungsbereich
- 32.: materialfreier Bereich
- 34.: erster Abschnitt
- 36.: zweiter Abschnitt
- 40.: Mittellinie
- 70.: Endbereich
- 72.: Flanken
- 74.: konturierter Überlappungsbereich
- 74a.: mittiger konturierter Überlappungsbereich
- 76.: Übergang
- 77.: Übergang
- 78.: Senkrechte

## Patentansprüche

1. Verfahren zum Verspleißen von vorimprägnierten Verstärkungsfasern, mit den Schritten:
- Bereitstellen eines vorimprägnierte Verstärkungsfasern umfassenden ersten Bands (10),
- Beschneiden eines Endbereichs (12) des ersten Bands (10) derart, dass zumindest ein Abschnitt eines stirnseitigen Rands (14) des ersten Bands (10) mit einem ersten Seitenrand (16) des ersten Bands (10) einen Winkel von 10-80° bildet,
- Bereitstellen eines vorimprägnierte Verstärkungsfasern umfassenden zweiten Bands (20),
- Beschneiden eines Endbereichs (22) des zweiten Bands (20) derart, dass zumindest ein Abschnitt eines stirnseitigen Rands (24) des zweiten Bands (20) mit einem ersten Seitenrand (26) des zweiten Band (20) einen Winkel von 10-80° bildet,
- Anordnen des ersten und des zweiten Bands (10, 20) derart, dass der Endbereich (12) des ersten Bands (10) dem Endbereich (22) des zweiten Bands (20) gegenüberliegt und der Endbereich (12) des ersten Bands (10) den Endbereich (22) des zweiten Bands (20) zumindest teilweise überlappt, und
- Verspleißen von Verstärkungsfasern des ersten Bands (10) mit Verstärkungsfasern des zweiten Bands (20) in einem Überlappungsbereich (30) des Endbereichs (12) des ersten Bands (10) mit dem Endbereich (22) des zweiten Bands (20),
wobei das erste und das zweite Band derart angeordnet werden, dass eine Fläche des Überlappungsbereichs des Endbereichs des ersten Bands mit dem Endbereich des zweiten Bands einer Fläche eines infolge der Beschneidung des Endbereichs des ersten Bands und des Endbereichs des zweiten Bands freibleibenden Bereichs entspricht.

2. Verfahren nach Anspruch 1,
wobei das erste und das zweite Band (10, 20) derart angeordnet werden, dass eine Fläche des Überlappungsbereichs (30) des Endbereichs (12) des ersten Bands (10) mit dem Endbereich (22) des zweiten Bands (20) einer Fläche eines infolge der Beschneidung des Endbereichs (12) des ersten Bands (10) und des Endbereichs (22) des zweiten Bands (20) freibleibenden Bereichs (32) entspricht.

3. Verfahren nach Anspruch 1 oder 2,
wobei der Endbereich (12) des ersten Bands (10) derart beschnitten wird, dass der gesamte stirnseitige Rand (14) des ersten Bands (10) mit dem ersten Seitenrand (16) des ersten Bands (10) einen Winkel von 10-80° bildet, und/oder wobei der Endbereich (22) des zweiten Bands (20) derart beschnitten wird, dass der gesamte stirnseitige Rand (24) des zweiten Bands (20) mit dem ersten Seitenrand (26) des zweiten Bands (20) einen Winkel von 10-80° bildet, und/oder
wobei das erste und das zweite Band (10, 20) derart angeordnet werden, dass der Überlappungsbereich (30) an den ersten Seitenrand (16) des ersten Bands (10) und an den ersten Seitenrand (26) des zweiten Bands (20) angrenzt und der freibleibende Bereich (32) an einen zweiten Seitenrand (18) des ersten Bands (10) und an einen zweiten Seitenrand (28) des zweiten Bands (20) angrenzt.

4. Verfahren nach einem der Ansprüche 1 bis 3,
wobei der Endbereich (12) des ersten Bands (10) derart beschnitten wird, dass ein erster Abschnitt (14a) des stirnseitigen Rands (14) des ersten Bands (10) mit dem ersten Seitenrand (16) des ersten Band (10) einen Winkel von 10-80° bildet und ein zweiter Abschnitt (14b) des stirnseitigen Rands (14) des ersten Bands (10) mit dem zweiten Seitenrand (18) des ersten Bands (10) einen Winkel von 10-80° bildet, und/oder wobei der Endbereich (12) des zweiten Bands (20) derart beschnitten wird, dass ein erster Abschnitt (22a) des stirnseitigen Rands (24) des zweiten Bands (20) mit dem ersten Seitenrand (26) des zweiten Bands (20) einen Winkel von 10-80° bildet und ein zweiter Abschnitt (22b) des stirnseitigen Rands (24) des zweiten Bands (20) mit dem zweiten Seitenrand (26) des zweiten Bands (20) einen Winkel von 10-80° bildet.

5. Verfahren nach Anspruch 4,
wobei das erste und das zweite Band (10, 20) derart angeordnet werden, dass ein erster Abschnitt (34) des Überlappungsbereichs (30) an den ersten Seitenrand (16) des ersten Bands (10) und an den ersten Seitenrand (26) des zweiten Bands (20) angrenzt, ein zweiter Abschnitt (36) des Überlappungsbereichs (30) an den zweiten Seitenrand (18) des ersten Bands (10) und an den zweiten Seitenrand (28) des zweiten Bands (20) angrenzt, und der freibleibende Bereich (32) zwischen dem ersten Abschnitt (34) des Überlappungsbereichs und dem zweiten Abschnitt (36) des Überlappungsbereichs (30) angeordnet ist.

6. Verfahren nach Anspruch 1,
wobei der Endbereich (12) des ersten Bands (10) derart beschnitten wird, dass er wenigstens einen materialfreien Bereich (32) aufweist und/oder der Endbereich (22) des zweiten Bands (20) derart beschnitten wird, dass er wenigstens einen materialfreien Bereich (32) aufweist, wobei der materialfreie Bereich (32) insbesondere rechteckförmig oder fransig ist.

7. Bandförmiges Verbundmaterialhalbzeug (40), das umfasst:
- ein vorimprägnierte Verstärkungsfasern umfassendes erstes Band (10), dessen Endbereich (12) derart beschnitten ist, dass zumindest ein Abschnitt eines stirnseitigen Rands (14) des ersten Bands (10) mit einem ersten Seitenrand (16) des ersten Bands (10) einen Winkel von 10-80° bildet,
- ein vorimprägnierte Verstärkungsfasern umfassendes zweites Band (20), dessen Endbereich (22) derart beschnitten ist, dass zumindest ein Abschnitt eines stirnseitigen Rands (24) des zweiten Bands (20) mit einem ersten Seitenrand (26) des zweiten Band (20) einen Winkel von 10-80° bildet, wobei
- das erste und das zweite Band (10, 20) derart angeordnet sind, dass der Endbereich (12) des ersten Bands (10) dem Endbereich (22) des zweiten Bands (20) gegenüberliegt und der Endbereich (12) des ersten Bands (10) den Endbereich (22) des zweiten Bands (20) zumindest teilweise überlappt, und
- Verstärkungsfasern des ersten Bands (10) mit Verstärkungsfasern des zweiten Bands (20) in einem Überlappungsbereich (30) des Endbereichs (12) des ersten Bands (10) mit dem Endbereich (22) des zweiten Bands (20) verspleißt sind,
wobei das erste und das zweite Band derart angeordnet sind, dass eine Fläche des Überlappungsbereichs des Endbereichs des ersten Bands mit dem Endbereich des zweiten Bands einer Fläche eines infolge der Beschneidung des Endbereichs des ersten Bands und des Endbereichs des zweiten Bands freibleibenden Bereichs entspricht.

8. Bandförmiges Verbundmaterialhalbzeug nach Anspruch 7,
wobei das erste und das zweite Band (10, 20) derart angeordnet sind, dass eine Fläche des Überlappungsbereichs (30) des Endbereichs (12) des ersten Bands (10) mit dem Endbereich (22) des zweiten Bands (20) einer Fläche eines freibleibenden Bereichs (32) entspricht.

9. Bandförmiges Verbundmaterialhalbzeug nach Anspruch 7 oder 8,
wobei in dem Endbereich (12) des ersten Bands (10) der gesamte stirnseitige Rand (14) des ersten Bands (10) mit dem ersten Seitenrand (16) des ersten Bands (10) einen Winkel von 10-80° bildet, und/oder wobei in dem Endbereich (22) des zweiten Bands (20) der gesamte stirnseitige Rand (24) des zweiten Bands (20) mit dem ersten Seitenrand (26) des zweiten Bands (20) einen Winkel von 10-80° bildet, und/oder
wobei das erste und das zweite Band (10, 20) derart angeordnet sind, dass der Überlappungsbereich (30) an den ersten Seitenrand (16) des ersten Bands (10) und an den ersten Seitenrand (26) des zweiten Bands (20) angrenzt, und der freibleibende Bereich (32) an einen zweiten Seitenrand (18) des ersten Bands (10) und an einen zweiten Seitenrand (28) des zweiten Bands (20) angrenzt.

10. Bandförmiges Verbundmaterialhalbzeug nach einem der Ansprüche 7 bis 9, wobei in dem Endbereich (12) des ersten Bands (10) ein erster Abschnitt (14a) des stirnseitigen Rands (14) des ersten Bands (10) mit dem ersten Seitenrand (16) des ersten Bands (10) einen Winkel von 10-80° bildet und ein zweiter Abschnitt (14b) des stirnseitigen Rands (14) des ersten Bands (10) mit dem zweiten Seitenrand (18) des ersten Bands (10) einen Winkel von 10-80° bildet, und/oder wobei in dem Endbereich (22) des zweiten Bands (20) ein erster Abschnitt (22a) des stirnseitigen Rands (24) des zweiten Bands (20) mit dem ersten Seitenrand (26) des zweiten Bands (20) einen Winkel von 10-80° bildet und ein zweiter Abschnitt (22b) des stirnseitigen Rands (24) des zweiten Bands (20) mit dem zweiten Seitenrand (26) des zweiten Bands (20) einen Winkel von 10-80° bildet.

11. Bandförmiges Verbundmaterialhalbzeug nach Anspruch 10,
wobei das erste und das zweite Band (10, 20) derart angeordnet sind, dass ein erster Abschnitt (34) des Überlappungsbereichs (30) an den ersten Seitenrand (16) des ersten Bands (10) und an den ersten Seitenrand (26) des zweiten Bands (20) angrenzt, ein zweiter Abschnitt (36) des Überlappungsbereichs (30) an den zweiten Seitenrand (18) des ersten Bands (10) und an den zweiten Seitenrand (28) des zweiten Bands (20) angrenzt, und der freibleibende Bereich (32) zwischen dem ersten Abschnitt (34) das Überlappungsbereichs und dem zweiten Abschnitt (36) des Überlappungsbereichs (30) angeordnet ist.

12. Verfahren zum Herstellen eines Verbundmaterials, bei dem ein bandförmiges Verbundmaterialhalbzeug nach einem der Ansprüche 7 bis 11 zu einem Verbundmaterial verarbeitet wird.

13. Verbundmaterial, das aus einem bandförmigen Verbundmaterialhalbzeug gemäß einem der Ansprüche 7 bis 11 oder nach einem Verfahren gemäß Anspruch 12 hergestellt ist, wobei das Verbundmaterial insbesondere ein Zwickelfüller ist.

## Claims

1. Method for splicing pre-impregnated reinforcement fibres, comprising the following method steps:
providing a first tape (10) comprising pre-impregnated reinforcement fibres;
trimming an end region (12) of the first tape (10) in such a manner that at least one portion of an end-side periphery (14) of the first tape (10), conjointly with a first lateral periphery (16) of the first tape (10), forms an angle of 10 to 80°;
providing a second tape (20) comprising pre-impregnated reinforcement fibres;
trimming an end region (22) of the second tape (20) in such a manner that at least one portion of an end-side periphery (24) of the second tape (20), conjointly with a first lateral periphery (26) of the first tape (20), forms an angle of 10 to 80°;
disposing the first and the second tape (10, 20) in such a manner that the end region (12) of the first tape (10) lies opposite the end region (22) of the second tape (20), and the end region (12) of the first tape (10) at least partially overlaps the end region (22) of the second tape (20); and
splicing reinforcement fibres of the first tape (10) to reinforcement fibres of the second tape (20) in an overlap region (30) of the end region (12) of the first tape (10) and the end region (22) of the second tape (20);
wherein the first and the second tape are disposed in such a manner that an area of the overlap region of the end region of the first tape and the end region of the second tape corresponds to an area of a vacant region resulting from the trimming of the end region of the first tape and the end region of the second tape.

2. Method according to Claim 1,
wherein the first and the second tape (10, 20) are disposed in such a manner that an area of the overlap region (30) of the end region (12) of the first tape (10) and the end region (22) of the second tape (20) corresponds to an area of a vacant region (32) resulting from the trimming of the end region (12) of the first tape (10) and the end region (22) of the second tape (20).

3. Method according to Claim 1 or 2,
wherein the end region (12) of the first tape (10) is trimmed in such a manner that the entire end-side periphery (14) of the first tape (10), conjointly with the first lateral periphery (16) of the first tape (10), forms an angle of 10 to 80°, and/or wherein the end region (22) of the second tape (20) is trimmed in such a manner that the entire end-side periphery (24) of the second tape (20), conjointly with the first lateral periphery (26) of the second tape (20), forms an angle of 10 to 80°, and/or wherein the first and the second tape (10, 20) are disposed in such a manner that the overlap region (30) is contiguous to the first lateral periphery (16) of the first tape (10) and to the first lateral periphery (26) of the second tape (20), and the vacant region (32) is contiguous to a second lateral periphery (18) of the first tape (10) and to a second lateral periphery (28) of the second tape (20).

4. Method according to one of Claims 1 to 3,
wherein the end region (12) of the first tape (10) is trimmed in such a manner that a first portion (14a) of the end-side periphery (14) of the first tape (10), conjointly with the first lateral periphery (16) of the first tape (10), forms an angle of 10 to 80°, and a second portion (14b) of the end-side periphery (14) of the first tape (10), conjointly with the second lateral periphery (18) of the first tape (10), forms an angle of 10 to 80°, and/or wherein the end region (12) of the second tape (20) is trimmed in such a manner that a first portion (22a) of the end-side periphery (24) of the second tape (20), conjointly with the first lateral periphery (26) of the second tape (20), forms an angle of 10 to 80°, and a second portion (22b) of the end-side periphery (24) of the second tape (20), conjointly with the second lateral periphery (26) of the second tape (20), forms an angle of 10 to 80°.

5. Method according to Claim 4,
wherein the first and the second tape (10, 20) are disposed in such a manner that a first portion (34) of the overlap region (30) is contiguous to the first lateral periphery (16) of the first tape (10) and to the first lateral periphery (26) of the second tape (20), a second portion (36) of the overlap region (30) is contiguous to the second lateral periphery (18) of the first tape (10) and to the second lateral periphery (28) of the second tape (20), and the vacant region (32) is disposed between the first portion (34) of the overlap region and the second portion (36) of the overlap region (30).

6. Method according to Claim 1,
wherein the end region (12) of the first tape (10) is trimmed in such a manner that said end-region (12) has at least one material-free region (32), and/or the end region (22) of the second tape (20) is trimmed in such a manner that said end region (22) has at least one material-free region (32), wherein the material-free region (32) is in particular rectangular or fringed.

7. Tape-shaped composite-material semi-finished product (40) comprising:
a first tape (10) which comprises pre-impregnated reinforcement fibres and the end region (12) of which is trimmed in such a manner that at least one portion of an end-side periphery (14) of the first tape (10), conjointly with a first lateral periphery (16) of the first tape (10), forms an angle of 10 to 80°;
a second tape (20) which comprises pre-impregnated reinforcement fibres and the end region (22) of which is trimmed in such a manner that at least one portion of an end-side periphery (24) of the second tape (20), conjointly with a first lateral periphery (26) of the second tape (20), forms an angle of 10 to 80°, wherein
the first and the second tape (10, 20) are disposed in such a manner that the end region (12) of the first tape (10) lies opposite the end region (22) of the second tape (20), and the end region (12) of the first tape (10) at least partially overlaps the end region (22) of the second tape (20); and
reinforcement fibres of the first tape (10) are spliced to reinforcement fibres of the second tape (20) in an overlap region (30) of the end region (12) of the first tape (10) and the end region (22) of the second tape (20);
wherein the first and the second tape are disposed in such a manner that an area of the overlap region of the end region of the first tape and the end region of the second tape corresponds to an area of a vacant region resulting from the trimming of the end region of the first tape and the end region of the second tape.

8. Tape-shaped composite-material semi-finished product according to Claim 7, wherein the first and the second tape (10, 20) are disposed in such a manner that an area of the overlap region (30) of the end region (12) of the first tape (10) and the end region (22) of the second tape (20) corresponds to an area of a vacant region (32).

9. Tape-shaped composite-material semi-finished product according to Claim 7 or 8,
wherein in the end region (12) of the first tape (10) the entire end-side periphery (14) of the first tape (10), conjointly with the first lateral periphery (16) of the first tape (10), forms an angle of 10 to 80°, and/or wherein in the end region (22) of the second tape (20) the entire end-side periphery (24) of the second tape (20), conjointly with the first lateral periphery (26) of the second tape (20), forms an angle of 10 to 80°, and/or wherein the first and the second tape (10, 20) are disposed in such a manner that the overlap region (30) is contiguous to the first lateral periphery (16) of the first tape (10) and to the first lateral periphery (26) of the second tape (20), and the vacant region (32) is contiguous to a second lateral periphery (18) of the first tape (10) and to a second lateral periphery (28) of the second tape (20).

10. Tape-shaped composite-material semi-finished product according to one of Claims 7 to 9,
wherein in the end region (12) of the first tape (10) a first portion (14a) of the end-side periphery (14) of the first tape (10), conjointly with the first lateral periphery (16) of the first tape (10), forms an angle of 10 to 80°, and a second portion (14b) of the end-side periphery (14) of the first tape (10), conjointly with the second lateral periphery (18) of the first tape (10), forms an angle of 10 to 80°, and/or wherein in the end region (22) of the second tape (20) a first portion (22a) of the end-side periphery (24) of the second tape (20), conjointly with the first lateral periphery (26) of the second tape (20), forms an angle of 10 to 80°, and a second portion (22b) of the end-side periphery (24) of the second tape (20), conjointly with the second lateral periphery (26) of the second tape (20), forms an angle of 10 to 80°.

11. Tape-shaped composite-material semi-finished product according to Claim 10, wherein the first and the second tape (10, 20) are disposed in such a manner that a first portion (34) of the overlap region (30) is contiguous to the first lateral periphery (16) of the first tape (10) and to the first lateral periphery (26) of the second tape (20), a second portion (36) of the overlap region (30) is contiguous to the second lateral periphery (18) of the first tape (10) and to the second lateral periphery (28) of the second tape (20), and the vacant region (32) is disposed between the first portion (34) of the overlap region and the second portion (36) of the overlap region (30).

12. Method for producing a composite material in which a tape-shaped composite-material semi-finished product according to one of Claims 7 to 11 is processed so as to form a composite material.

13. Composite material which is produced from a tape-shaped composite-material semi-finished product according to one of Claims 7 to 11 or by a method according to Claim 12, wherein the composite material is in particular a gusset filler.

## Revendications

1. Procédé destiné à épisser des fibres de renfort pré-imprégnées, comprenant les étapes consistant à:
- fournir une première bande (10) comportant des fibres de renfort pré-imprégnées,
- couper une région d'extrémité (12) de la première bande (10) de telle sorte qu'au moins une partie d'un bord frontal (14) de la première bande (10) forme un angle de 10° à 80° avec un premier bord latéral (16) de la première bande (10),
- fournir une deuxième bande (20) comportant des fibres de renfort pré-imprégnées,
- couper une région d'extrémité (22) de la deuxième bande (20) de telle sorte qu'au moins une partie d'un bord frontal (24) de la deuxième bande (20) forme un angle de 10° à 80° avec un premier bord latéral (26) de la deuxième bande (20),
- disposer la première et la deuxième bande (10, 20) de telle sorte que la région d'extrémité (12) de la première bande (10) soit en regard de la région d'extrémité (22) de la deuxième bande (20) et que la région d'extrémité (12) de la première bande (10) chevauche au moins partiellement la région d'extrémité (22) de la deuxième bande (20) et
- épisser des fibres de renfort de la première bande (10) avec des fibres de renfort de la deuxième bande (20) dans une région de chevauchement (30) de la région d'extrémité (12) de la première bande (10) avec la région d'extrémité (22) de la deuxième bande (20),
selon lequel la première et la deuxième bande sont disposées de telle sorte qu'une surface de la région de chevauchement de la région d'extrémité de la première bande avec la région d'extrémité de la deuxième bande corresponde à une surface d'une région restant libre suite à la découpe de la région d'extrémité de la première bande et de la région d'extrémité de la deuxième bande.

2. Procédé selon la revendication 1,
selon lequel la première et la deuxième bande (10, 20) sont disposées de telle sorte qu'une surface de la région de chevauchement (30) de la région d'extrémité (12) de la première bande (10) avec la région d'extrémité (22) de la deuxième bande (20) corresponde à une surface d'une région (32) restant libre suite à la découpe de la région d'extrémité (12) de la première bande (10) et de la région d'extrémité (22) de la deuxième bande (20).

3. Procédé selon la revendication 1 ou 2,
selon lequel la région d'extrémité (12) de la première bande (10) est découpée de telle sorte que tout le bord frontal (14) de la première bande (10) forme un angle de 10° à 80° avec le premier bord latéral (16) de la première bande (10),
et/ou selon lequel la région d'extrémité (22) de la deuxième bande (20) est découpée de telle sorte que tout le bord frontal (24) de la deuxième bande (20) forme un angle de 10° à 80° avec le premier bord latéral (26) de la deuxième bande (20), et/ou
selon lequel la première et la deuxième bande (10, 20) sont disposées de telle sorte que la région de chevauchement (30) soit adjacente au premier bord latéral (16) de la première bande (10) et au premier bord latéral (26) de la deuxième bande (20) et que la région (32) restant libre soit adjacente à un deuxième bord latéral (18) de la première bande (10) et à un deuxième bord latéral (28) de la deuxième bande (20).

4. Procédé selon l'une des revendications 1 à 3,
selon lequel la région d'extrémité (12) de la première bande (10) est découpée de telle sorte qu'une première partie (14a) du bord frontal (14) de la première bande (10) forme un angle de 10° à 80° avec le premier bord latéral (16) de la première bande (10) et qu'une deuxième partie (14b) du bord frontal (14) de la première bande (10) forme un angle de 10° à 80° avec le deuxième bord latéral (18) de la première bande (10), et/ou selon lequel la région d'extrémité (12) de la deuxième bande (20) est découpée de telle sorte qu'une première partie (22a) du bord frontal (24) de la deuxième bande (20) forme un angle de 10° à 80° avec le premier bord latéral (26) de la deuxième bande (20) et qu'une deuxième partie (22b) du bord frontal (24) de la deuxième bande (20) forme un angle de 10° à 80° avec le deuxième bord latéral (26) de la deuxième bande (20).

5. Procédé selon la revendication 4,
selon lequel la première et la deuxième bande (10, 20) sont disposées de telle sorte qu'une première partie (34) de la région de chevauchement (30) soit adjacente au premier bord latéral (16) de la première bande (10) et au premier bord latéral (26) de la deuxième bande (20), qu'une deuxième partie (36) de la région de chevauchement (30) soit adjacente au deuxième bord latéral (18) de la première bande (10) et au deuxième bord latéral (28) de la deuxième bande (20), et que la région (32) restant libre soit disposée entre la première partie (34) de la région de chevauchement et la deuxième partie (36) de la région de chevauchement (30).

6. Procédé selon la revendication 1,
selon lequel la région d'extrémité (12) de la première bande (10) est découpée de telle sorte qu'elle comprend au moins une région (32) dépourvue de matériau et/ou la région d'extrémité (22) de la deuxième bande (20) est découpée de telle sorte qu'elle comprend au moins une région (32) dépourvue de matériau, selon lequel la région (32) dépourvue de matériau est en particulier rectangulaire ou effrangée.

7. Produit semi-fini (40) en matériau composite en forme de bande, lequel comporte :
- une première bande (10) comportant des fibres de renfort pré-imprégnées, bande dont la région d'extrémité (12) est découpée de telle sorte qu'au moins une partie d'un bord frontal (14) de la première bande (10) forme un angle de 10° à 80° avec un premier bord latéral (16) de la première bande (10),
- une deuxième bande (20) comportant des fibres de renfort pré-imprégnées, bande dont la région d'extrémité (22) est découpée de telle sorte qu'au moins une partie d'un bord frontal (24) de la deuxième bande (20) forme un angle de 10° à 80° avec un premier bord latéral (26) de la deuxième bande (20), dans lequel
- la première et la deuxième bande (10, 20) sont disposées de telle sorte que la région d'extrémité (12) de la première bande (10) soit en regard de la région d'extrémité (22) de la deuxième bande (20) et que la région d'extrémité (12) de la première bande (10) chevauche au moins partiellement la région d'extrémité (22) de la deuxième bande (20) et
- des fibres de renfort de la première bande (10) sont épissées avec des fibres de renfort de la deuxième bande (20) dans une région de chevauchement (30) de la région d'extrémité (12) de la première bande (10) avec la région d'extrémité (22) de la deuxième bande (20),
selon lequel la première et la deuxième bande sont disposées de telle sorte qu'une surface de la région de chevauchement de la région d'extrémité de la première bande avec la région d'extrémité de la deuxième bande corresponde à une surface d'une région restant libre suite à la découpe de la région d'extrémité de la première bande et de la région d'extrémité de la deuxième bande.

8. Produit semi-fini en matériau composite en forme de bande selon la revendication 7,
dans lequel la première et la deuxième bande (10, 20) sont disposées de telle sorte qu'une surface de la région de chevauchement (30) de la région d'extrémité (12) de la première bande (10) avec la région d'extrémité (22) de la deuxième bande (20) corresponde à une surface d'une région (32) restant libre.

9. Produit semi-fini en matériau composite en forme de bande selon la revendication 7 ou 8,
dans lequel, dans la région d'extrémité (12) de la première bande (10), tout le bord frontal (14) de la première bande (10) forme un angle de 10° à 80° avec le premier bord latéral (16) de la première bande (10), et/ou dans lequel, dans la région d'extrémité (22) de la deuxième bande (20), tout le bord frontal (24) de la deuxième bande (20) forme un angle de 10° à 80° avec le premier bord latéral (26) de la deuxième bande (20), et/ou
dans lequel la première et la deuxième bande (10, 20) sont disposées de telle sorte que la région de chevauchement (30) soit adjacente au premier bord latéral (16) de la première bande (10) et au premier bord latéral (26) de la deuxième bande (20) et que la région (32) restant libre soit adjacente à un deuxième bord latéral (18) de la première bande (10) et à un deuxième bord latéral (28) de la deuxième bande (20).

10. Produit semi-fini en matériau composite en forme de bande selon l'une des revendications 7 à 9,
dans lequel, dans la région d'extrémité (12) de la première bande (10), une première partie (14a) du bord frontal (14) de la première bande (10) forme un angle de 10° à 80° avec le premier bord latéral (16) de la première bande (10) et une deuxième partie (14b) du bord frontal (14) de la première bande (10) forme un angle de 10° à 80° avec le deuxième bord latéral (18) de la première bande (10), et/ou dans lequel, dans la région d'extrémité (22) de la deuxième bande (20), une première partie (22a) du bord frontal (24) de la deuxième bande (20) forme un angle de 10° à 80° avec le premier bord latéral (26) de la deuxième bande (20) et une deuxième partie (22b) du bord frontal (24) de la deuxième bande (20) forme un angle de 10° à 80° avec le deuxième bord latéral (26) de la deuxième bande (20).

11. Produit semi-fini en matériau composite en forme de bande selon la revendication 10,
dans lequel la première et la deuxième bande (10, 20) sont disposées de telle sorte qu'une première partie (34) de la région de chevauchement (30) soit adjacente au premier bord latéral (16) de la première bande (10) et au premier bord latéral (26) de la deuxième bande (20), qu'une deuxième partie (36) de la région de chevauchement (30) soit adjacente au deuxième bord latéral (18) de la première bande (10) et au deuxième bord latéral (28) de la deuxième bande (20), et que la région (32) restant libre soit disposée entre la première partie (34) de la région de chevauchement et la deuxième partie (36) de la région de chevauchement (30).

12. Procédé de fabrication d'un matériau composite, procédé selon lequel un produit semi-fini en matériau composite en forme de bande selon l'une des revendications 7 à 11 est traité pour obtenir un matériau composite.

13. Matériau composite qui est fabriqué à partir d'un produit semi-fini en matériau composite en forme de bande selon l'une des revendications 7 à 11 ou selon un procédé selon la revendication 12, le matériau composite étant en particulier un gousset de remplissage.
